# EUROPÄISCHE PATENTANMELDUNG

(11) **EP 1 626 191 A1**
(43) Veröffentlichungstag der Anmeldung: **15.02.2006**
(21) Anmeldenummer: 04019155.3
(22) Anmeldetag: 12.08.2004
(51) Int. Cl.: F16D 48/08

(54) **Verfahren und Anordnung zur Regelung der Kriechgeschwindigkeit eines Fahrzeugs**

(71) Anmelder: BorgWarner Inc., Auburn Hills MI 48326 (US)
(72) Erfinder: Gröpper, Tobias, 69117 Heidelberg (DE); Wirch, Artur, 67346 Speyer (DE)
(74) Vertreter: Patentanwälte Westphal, Mussgnug & Partner

(57) **Zusammenfassung**

Die Erfindung betrifft ein Verfahren und eine Anordnung zur Regelung der Kriechgeschwindigkeit bei Kraftfahrzeugen mit automatischer oder automatisierter Kupplung. Mit Hilfe des Verfahrens und der Anordnung wird das von der Kupplung übertragene Drehmoment geregelt, welches unmittelbaren Einfluss auf die Kriechgeschwindigkeit hat.

## Beschreibung

Die Erfindung betrifft ein Verfahren und eine Anordnung zur Regelung der Kriechgeschwindigkeit bei Kraftfahrzeugen mit automatischer oder automatisierter Kupplung.

Bei Kraftfahrzeugen mit Automatikgetriebe ist es üblich, dass sich das Fahrzeug in Bewegung setzt, wenn eine Fahrstufe eingelegt ist und die Fußbremse gelöst wird. Selbst wenn der Fahrer das Fahrpedal nicht niedertritt, wird eine gewisse Geschwindigkeit erreicht. Dieses ist ein gewünschtes Verhalten von Fahrzeugen mit Automatikgetriebe, welches das Rangieren erleichtert. Diese Funktion eines automatischen Getriebes wird "Kriechen" genannt. Die zugehörige Geschwindigkeit ist die sogenannte "Kriechgeschwindigkeit".

Herkömmliche Automatikgetriebe mit Drehmomentwandler und Planetenrädern bieten eine nahezu konstante Kriechgeschwindigkeit. Dies ist durch den Drehmomentwandler und seine Charakteristik bedingt.

Bei Fahrzeugen mit regelbarem Anfahrelement, wie automatische oder automatisierte Anfahrkupplungen, wird ein konstantes Drehmoment von der Kupplung auf die Räder übertragen. Hierdurch hängt die Kriechgeschwindigkeit stark von den Straßenverhältnissen ab. Bei erhöhten Fahrwiderständen reicht das Drehmoment häufig nicht aus, um das Fahrzeug zu bewegen. Dieser Fall kann beispielsweise auftreten, wenn das Fahrzeug mit einem oder mehreren Rädern im Sand oder in Regenabläufen steht. Daneben gibt es Situationen, in denen das Fahrzeug vergleichsweise leicht rollen kann. In diesen Situationen kriecht das Fahrzeug schneller, als der Fahrer es gewohnt ist.

Der Erfindung liegt die Aufgabe zugrunde, ein Verfahren und eine Anordnung vorzuschlagen, aufgrund derer ein inkonsistentes Kriechverhalten zumindest weitgehend vermieden wird.

Diese Aufgabe wird durch ein Verfahren gemäß Patentanspruch 1 sowie durch eine Anordnung gemäß Patentanspruch 12 gelöst.

Das Verfahren umfasst mindestens ein Hauptregelverfahren und die Anordnung umfasst mindestens eine Hauptanordnung, bei der eine Regelgröße x, also die zu regelnde Größe, die Fahrzeuggeschwindigkeit ist. Eine Führungsgröße w ist dabei die Sollkriechgeschwindigkeit. Mit Hilfe einer Fahrzeuggeschwindigkeitsmesseinrichtung wird kontinuierlich oder diskontinuierlich in diskreten Zeitabständen, die Fahrzeuggeschwindigkeit (Regelgröße x) gemessen. Mittels eines Vergleichers wird eine Regeldifferenz e aus der Differenz von Führungsgröße w (Sollkriechgeschwindigkeit) und Regelgröße x (Fahrzeuggeschwindigkeit) errechnet. Diese Regeldifferenz e ist die Eingangsgröße für einen Regler, insbesondere einen Softwareregler vom Typ PID. Der Regler ermittelt eine Reglerausgangsgröße yᵣ und gibt diese aus. Hierbei handelt es sich um einen elektrischen Strom, insbesondere ein elektrisches Signal. In Abhängigkeit von diesem Strom erzeugt ein Steller eine Stellgröße y zur Beeinflussung eines Stellgliedes. Als Stellglied fungiert ein Bestandteil der Kupplung. Hierbei wird unter Kupplung nicht nur die eigentliche Kupplungseinrichtung, sondern sämtliche zum Betreiben der Kupplungseinrichtung notwendigen Bauteile verstanden. Das Stellglied wiederum beeinflusst unmittelbar das von einer Kupplungseinrichtung (z.B. Lamellenpaket) übertragene Drehmoment und somit die Kriechgeschwindigkeit.

Mit Hilfe des beschriebenen Verfahrens und der beschriebenen Anordnung wird erstmals ein konsistentes Kriechverhalten von Kraftfahrzeugen mit regelbaren Anfahrelementen bereitgestellt.

Das Verfahren und die Anordnung können beispielsweise bei Lamellenkupplungen oder Einscheibentrockenkupplungen eingesetzt werden.

In Ausgestaltung der Erfindung ist mit Vorteil vorgesehen, dass als Steller eine Ventileinrichtung verwendet wird, und die vom Steller ausgegebene Stellgröße y ein hydraulischer Flüssigkeitsdruck eines Druckmediums ist, das auf das Stellglied, einen Kupplungskolben, einwirkt. Der Kupplungskolben überträgt eine aus der Druckeinwirkung resultierende Kraft auf die Kupplungseinrichtung. Der in den Steller eingehende elektrische Strom beeinflusst eine Ventilstellung, die wiederum Einfluss auf den Flüssigkeitsdruck eines Druckmediums hat. Mit Hilfe des Druckmediums wird der Kupplungskolben betätigt. Der Kupplungskolben selbst wirkt unmittelbar auf die Kupplungseinrichtung. Dabei kann es sich bei der Kupplungseinrichtung beispielsweise um ein Lamellenpaket oder eine Kupplungsscheibe handeln. Je stärker die Lamellen aneinander gepresst werden, desto größer ist das von der Kupplungseinrichtung übertragene Drehmoment und umso größer ist die resultierende Kriechgeschwindigkeit.

Alternativ ist mit Vorteil vorgesehen, dass als Steller ein Elektromotor mit einer Ausrückeinrichtung verwendet wird. Der Elektromotor wird aufgrund des Reglerausgangsgröße yᵣ betätigt und verstellt eine Ausrückeinrichtung. Hieraus ergibt sich eine bestimmte Ausrückposition, die als Stellgröße y bezeichnet wird. Hierdurch wird das Stellglied, eine Druckplatte, betätigt. Die Druckplatte wird in Abhängigkeit von der Ausrückposition verschoben. Hierdurch wird die Kupplungseinrichtung entweder etwas geöffnet oder geschlossen, wodurch unmittelbar das übertragene Drehmoment und somit die Kriechgeschwindigkeit beeinflusst werden.

Gemäß einer weiteren alternativen Ausgestaltung der Anordnung und des Verfahrens ist vorgesehen, dass als Steller ein Elektromotor mit hydraulischem Geberzylinder verwendet wird. Der Motor betätigt aufgrund der Reglerausgangsgröße yᵣ einen hydraulischen Geberzylinder, wodurch ein hydraulischer Druck (Stellgröße y) erzeugt wird, welcher wiederum eine Ausrückposition einer Ausrückeinrichtung beeinflusst. Die Ausrückposition hat unmittelbaren Einfluss auf das Stellglied, eine Druckplatte. Eine aus der Ausrückposition resultierende Kraft wird auf die Kupplungseinrichtung übertragen. Hierdurch verändert sich das übertragene Drehmoment und somit die Kriechgeschwindigkeit.

Als Kupplungseinrichtungen kommen Lamellenkupplungen oder Einscheibentrockenkupplungen zum Einsatz. Je größer die Kraft ist, mit der die Lamellen gegeneinander gepresst werden, desto größer ist das von der Kupplungseinrichtung übertragene Drehmoment. Je größer das übertragene Drehmoment, desto größer ist die daraus resultierende Kriechgeschwindigkeit.

Das Kriechverhalten des Fahrzeugs kann besondern komfortabel ausgestaltet werden, indem die Führungsgröße w während des Verfahrens geführt wird. Hierfür ist eine spezielle Führungseinrichtung vorgesehen. Insbesondere wird die Führungsgröße bei Aktivierung des Hauptregelverfahrens bzw. der Hauptanordnung von einem Anfangswert stetig auf einen Zielwert geführt. Dabei ist es von besonderem Vorteil, wenn dieser Anfangswert der momentanen Fahrzeuggeschwindigkeit, also der Regelgröße x, entspricht.

Es ist besonders zweckmäßig, dass vor der Aktivierung des Hauptregelverfahrens bzw. der Hauptanordnung zum Ankriechen des Fahrzeuges aus dem Stillstand ein Vorverfahren bzw. eine Nebenanordnung aktiviert wird, wodurch ein Anfangsdrehmoment, vorzugsweise zwischen 5 Nm und 30 Nm, an die Kupplung angelegt wird, ein Timer gestartet wird, und das Hauptregelverfahren bzw. die Hauptanordnung erst nach Ablauf des Timers aktiviert wird. Auf diese Weise fühlt sich für den Fahrer das Einsetzen der Fahrzeugbewegung immer gleich an. Des Weiteren wird der Kupplung Zeit gegeben, den Antriebsstrang vorzuspannen und den Motor zu belasten. Letzterer wiederum wird die Haltezeit nutzen, um die plötzlich auftretende Last mittels der Leergasregelung aufzufangen. Am Ende der Haltezeit, also nach Ablauf des Timers, sind stabile Verhältnisse im Antriebsstrang hergestellt und das Fahrzeug bewegt sich bereits. Das anstehende Drehmoment nach Ablauf des Timers dient dem Regler darüber hinaus als sogenannte Feed-Forward-Komponente. Das Hauptregelverfahren sorgt von nun an für eine gewünschte Kriechgeschwindigkeit.

In Ausgestaltung der Erfindung ist mit Vorteil vorgesehen, dass mittels einer elektronischen Überwachungseinrichtung das Hauptregelverfahren bzw. die Hauptanordnung aktiviert wird, wenn bestimmte Voraussetzungen für den Fahrzustand "Kriechen" erfüllt sind. Solche Voraussetzungen können vorzugsweise sein: Zündung gleich "Ein", Motor im Leerlauf, Fahrzeugpedalwinkel ist gleich "Null", Wählhebel nicht in "N"- oder in "P"-Stellung, Gang eingelegt, Bremse nicht getreten.

Mit derselben Überwachungseinrichtung oder einer weiteren Überwachungseinrichtung wird das Hauptregelverfahren bzw. die Hauptanordnung oder das Vorverfahren bzw. die Nebenanordnung deaktiviert, wenn beispielsweise mindestens eine Voraussetzung für den Fahrzustand "Kriechen" nicht mehr erfüllt ist.

Anhand der Zeichnung wird das Verfahren sowie die Anordnung näher erläutert.

Es zeigen:

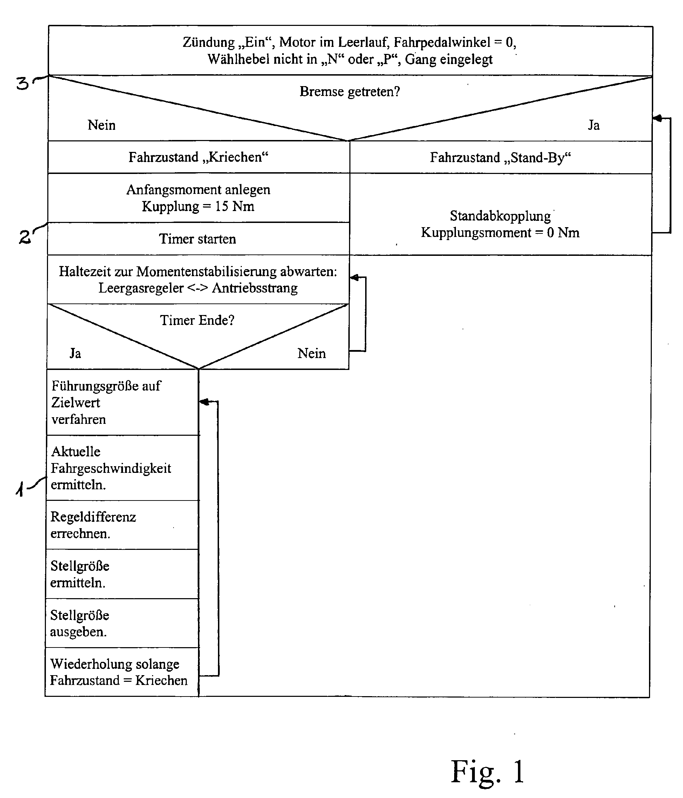

- Fig. 1: einen Verfahrensablaufplan und
- Fig. 2: eine mögliche Kriechgeschwindigkeitsregelungsanordnung.

Mit der Bezugsziffer 1 ist ein Hauptregelverfahren gekennzeichnet. Bezugszeichen 2 kennzeichnet ein Vorverfahren. Bezugszeichen 3 kennzeichnet ein übergeordnetes Überwachungsverfahren.

Bei dem Hauptregelverfahren handelt es sich um ein Folgeregelungsverfahren, da die Führungsgröße w stetig auf einen Zielwert verfahren wird. Dabei entspricht der Anfangswert für die Führungsgröße der momentanen Fahrzeuggeschwindigkeit bei der Aktivierung des Hauptregelverfahrens.
Die Fahrzeuggeschwindigkeit (Regelgröße x) wird gemessen und eine Regeldifferenz e errechnet. Über einen Regler 6 wird eine Reglerausgangsgröße yᵣ ermittelt, aufgrund derer ein Steller 7 eine Stellgröße y ausgibt. Diese Stellgröße y betätigt ein Stellglied 8, welches wiederum auf eine Kupplungseinrichtung wirkt. In Abhängigkeit der von dem Stellglied 8 auf die Kupplungseinrichtung übertragene Kraft verändert sich das von der Kupplungseinrichtung übertragene Drehmoment, wodurch unmittelbar die Kriechgeschwindigkeit beeinflusst wird. Dieser Vorgang wird solange wiederholt, bis das Hauptregelverfahren bzw. die Hauptanordnung von einem übergeordneten Überwachungsverfahren bzw. einer Überwachungseinrichtung deaktiviert wird. Bevor das Hauptregelverfahren bzw. Die Hauptanordnung aktiviert wird, wird ein Vorverfahren bzw. eine Nebenanordnung aktiviert, bei der ein Anfangsmoment an die Kupplung angelegt wird und ein Timer gestartet wird. Die Timerlaufzeit beträgt beispielsweise 300 ms. Nach Ablauf des Timers wird das Hauptregelverfahren bzw. die Hauptanordnung aktiviert.

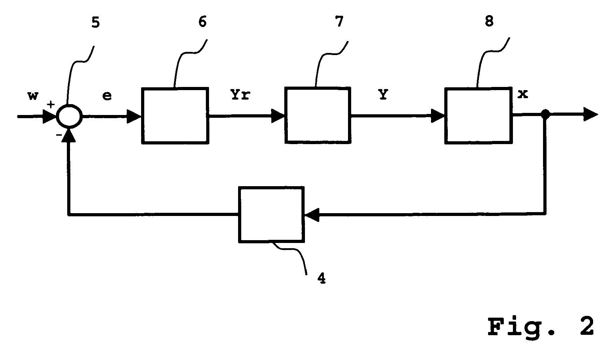

In Fig. 2 ist eine mögliche Ausgestaltung einer Kriechgeschwindigkeitsregelanordnung 9 dargestellt. Dabei bezeichnet w die Führungsgröße, also die Sollkriechgeschwindigkeit. Diese wird von einem Anfangswert, insbesondere der momentanen Fahrzeuggeschwindigkeit, auf einen Zielwert geführt. Die Regelgröße x ist die Fahrzeuggeschwindigkeit.

Mittels einer Fahrzeuggeschwindigkeitsmesseinrichtung 4 wird die Regelgröße x kontinuierlich oder diskontinuierlich in diskreten Zeitabständen gemessen. Mittels eines Vergleichers 5 wird eine Regeldifferenz e berechnet, die als Eingangsgröße für einen Regler 6 dient. Bei dem Regler 6 handelt es sich bei diesem Ausführungsbeispiel um einen Softwareregler vom Typ PID. Der Regler 6 gibt eine Reglerausgangsgröße yᵣ, ein elektrisches Signal, aus. Ein Steller 7 gibt eine Stellgröße y in Abhängigkeit der Reglerausgangsgröße yᵣ aus, die auf ein Stellglied 8 einwirkt. Durch das Stellglied 8 wird eine Kupplungseinrichtung betätigt, wodurch das von der Kupplung übertragene Drehmoment beeinflusst wird. Das übertragene Drehmoment hat unmittelbaren Einfluss auf die Regelgröße x. In diesem Ausführungsbeispiel ist der Steller 7 eine Ventileinrichtung. Aufgrund der Reglerausgangsgröße wird die Ventilstellung beeinflusst, wodurch wiederum ein Druck in einem Druckmedium beeinflusst wird. Dieser Druck ist die vom Steller 7 ausgegebene Stellgröße y. Dieser wirkt auf das Stellglied 8. In diesem Fall ist das Stellglied 8 ein Kupplungskolben. Der Kupplungskolben übertragt die aus der Druckeinwirkung resultierende Kraft auf die Kupplungseinrichtung, ein Lamellenpaket, wodurch das übertragene Drehmoment und somit die Kriechgeschwindigkeit beeinflusst wird.

### Bezugszeichenliste

- 1: Hauptregelverfahren
- 2: Vorverfahren
- 3: Überwachungsverfahren
- 4: Messeinrichtung
- 5: Vergleicher
- 6: Regler
- 7: Steller
- 8: Stellglied
- 9: Kriechgeschwindigkeitsregelungsanordnung

- x: Regelgröße
- w: Führungsgröße
- yᵣ: Reglerausgangsgröße
- y: Stellgröße
- e: Regeldifferenz

## Patentansprüche

1. Verfahren zur Regelung der Kriechgeschwindigkeit bei Kraftfahrzeugen mit automatischer oder automatisierter Kupplung,
**dadurch gekennzeichnet, dass** das Verfahren mindestens ein Hauptregelverfahren umfasst, bei dem
• eine Regelgröße (x) die Fahrzeuggeschwindigkeit ist,
• eine Führungsgröße (w) die Sollkriechgeschwindigkeit ist,
• eine Regelgröße (x) kontinuierlich, oder diskontinuierlich in diskreten Zeitabständen, gemessen wird,
• eine Regeldifferenz (e) mit einem Vergleicher (5) aus der Differenz von Führungsgröße (w) und Regelgröße (x) berechnet wird,
• die Regeldifferenz (e) die Eingangsgröße für einen Regler (6), vorzugsweise einen Softwareregler, insbesondere vom Typ PID, ist,
• der Regler (6) eine Reglerausgangsgröße (yᵣ) ausgibt,
• ein Steller (7) in Abhängigkeit von der Reglerausgangsgröße (yᵣ) eine Stellgröße (y) zur Beeinflussung eines Stellgliedes (8) ausgibt,
• als Stellglied (8) ein Bestandteil der Kupplung verwendet wird,
• das Stellglied (8) das von einer Kupplungseinrichtung übertragene Drehmoment beeinflusst.

2. Verfahren nach Anspruch 1,
**dadurch gekennzeichnet, dass** als Steller (7) eine Ventileinrichtung verwendet wird, und die vom Steller (7) ausgegebene Stellgröße (y) ein hydraulischer Flüssigkeitsdruck eines Druckmediums ist, das auf das Stellglied (8), einen Kupplungskolben, einwirkt und wobei der Kupplungskolben eine aus der Druckeinwirkung resultierende Kraft auf die Kupplungseinrichtung überträgt.

3. Verfahren nach Anspruch 1,
**dadurch gekennzeichnet, dass** als Steller (7) ein Elektromotor mit einer Ausrückeinrichtung verwendet wird, und die vom Steller (7) ausgegebene Stellgröße (y) eine Ausrückposition ist, wodurch das Stellglied (8), eine Druckplatte, eine aus der Ausrückposition resultierende Kraft auf die Kupplungseinrichtung überträgt.

4. Verfahren nach Anspruch 1,
**dadurch gekennzeichnet, dass** als Steller (7) ein Elektromotor mit hydraulischem Geberzylinder verwendet wird, und die vom Steller (7) ausgegebene Stellgröße (y) ein hydraulischer Druck ist der eine Ausrückposition einer Ausrückeinrichtung beeinflusst, wodurch das Stellglied (8), eine Druckplatte, eine aus der Ausrückposition resultierende Kraft auf die Kupplungseinrichtung überträgt.

5. Verfahren nach einem der vorhergehenden Ansprüche,
**dadurch gekennzeichnet, dass** als Kupplungseinrichtung eine Lamellenkupplung verwendet wird.

6. Verfahren nach einem Ansprüche 1 bis 4,
**dadurch gekennzeichnet, dass** als Kupplungseinrichtung eine Einscheibentrockenkupplung verwendet wird.

7. Verfahren nach einem der vorhergehenden Ansprüche, Verfahren nach Anspruch 1,
**dadurch gekennzeichnet , dass** die Führungsgröße (w) während des Verfahrens geführt wird.

8. Verfahren nach Anspruch 7,
**dadurch gekennzeichnet, dass** die Führungsgröße (w) bei Aktivierung des Hauptregelverfahrens von der einem Anfangswert, vorzugsweise von der Regelgröße (x), stetig auf einen Zielwert geführt wird.

9. Verfahren nach einem der vorhergehenden Ansprüche,
**dadurch gekennzeichnet, dass** vor der Aktivierung des Hauptregelverfahren ein Vorverfahren aktiviert wird, bei dem
• ein Anfangsdrehmoment, vorzugsweise zwischen 5 Nm und 30 Nm, an die Kupplung angelegt wird
• ein Timer gestartet wird,
• das Hauptregelverfahren nach Ablauf des Timers aktiviert wird.

10. Verfahren nach einem der vorhergehenden Verfahren,
**dadurch gekennzeichnet, dass** das Vorverfahren oder das Hauptregelverfahren nur aktiviert wird, wenn bestimmte Voraussetzungen für den Fahrzustand "Kriechen" erfüllt sind, insbesondere muss erfüllt sein, dass die momentane Fahrzeuggeschwindigkeit einem Maximalwert nicht überschreitet und/oder die Zündung eingeschaltet ist.

11. Verfahren nach einem der vorhergehenden Ansprüche,
**dadurch gekennzeichnet, dass** das Vorverfahren und/oder das Hauptregelverfahren deaktiviert werden, wenn mindestens eine Voraussetzung für den Fahrzustand "Kriechen" nicht mehr erfüllt ist.

12. Kriechgeschwindigkeitsregelungsanordnung, insbesondere Kriechgeschwindigkeitsregelanordnung mit der die Kriechgeschwindigkeit mit den Verfahrensschritten eines der Ansprüche 1 bis 11 geregelt wird,
**dadurch gekennzeichnet, dass** die Kriechgeschwindigkeitsregelungsanordnung (9) mindestens eine Hauptanordnung umfasst, bei der
• eine Fahrzeuggeschwindigkeitsmesseinrichtung (4) zur kontinuierlichen, oder diskontinuierlichen Messung einer Regelgröße (x), vorgesehen ist, wobei die Regelgröße (x) die Fahrzeugkriechgeschwindigkeit ist,
• ein Vergleicher (5) zur Berechnung einer Regeldifferenz e aus der Differenz einer Führungsgröße (w) (Sollgeschwindigkeit), und Regelgröße x, vorgesehen ist,
• ein Regler (6), vorzugsweise einen Softwareregler, insbesondere vom Typ PID, vorgesehen ist, wobei die Regeldifferenz (e) die Eingangsgröße für den Regler (6) ist,
• ein Steller (7), zur Ausgabe einer Stellgröße (y) in Abhängigkeit einer Reglerausgangsgröße (yᵣ) , vorgesehen ist,
• ein Stellglied (8) vorgesehen ist, dass in Abhängigkeit von der Stellgröße (y) auf eine Kupplungseinrichtung einwirkend angeordnet ist,
• das Stellglied (8) ein Bestandteil der Kupplung ist.

13. Kriechgeschwindigkeitsregelungsanordnung nach Anspruch 12,
**dadurch gekennzeichnet, dass** der Steller (7) eine Ventileinrichtung ist, und die vom Steller (7) ausgegebene Stellgröße (y) ein hydraulischer Flüssigkeitsdruck eines Druckmediums ist, wobei das Stellglied (8) in Abhängigkeit des Flüssigkeitsdrucks verstellbar ist und wobei das Stellglied (8) ein Kupplungskolben ist.

14. Kriechgeschwindigkeitsregelungsanordnung nach Anspruch 12,
**dadurch gekennzeichnet, dass** der Steller (7) ein Elektromotor mit einer Ausrückeinrichtung ist, und die vom Steller (7) ausgegebene Stellgröße (y) eine Ausrückposition ist, wobei das Stellglied (8) in Abhängigkeit der Ausrückposition verstellbar ist und wobei das Stellglied (8) eine Druckplatte ist.

15. Kriechgeschwindigkeitsregelungsanordnung nach Anspruch 12,
**dadurch gekennzeichnet, dass** der Steller (7) ein Elektromotor mit hydraulischem Geberzylinder ist, und die vom Steller (7) ausgegebene Stellgröße (y) ein hydraulischer Druck ist, der eine Ausrückposition einer Ausrückeinrichtung beeinflusst, wobei das Stellglied (8) in Abhängigkeit der Ausrückposition verstellbar ist und wobei das Stellglied (8) eine Druckplatte ist.

16. Kriechgeschwindigkeitsregelungsanordnung nach einem der Ansprüche 12 bis 15,
**dadurch gekennzeichnet, dass** die Kupplungseinrichtung eine Lamellenkupplung ist.

17. Kriechgeschwindigkeitsregelungsanordnung nach einem der Ansprüche 12 bis 15,
**dadurch gekennzeichnet, dass** die Kupplungseinrichtung eine Einscheibentrockenkupplung ist.

18. Kriechgeschwindigkeitsregelungsanordnung nach einem der Ansprüche 12 bis 17,
**dadurch gekennzeichnet, dass** eine Führungseinrichtung zur Führung der Führungsgröße (w) während des Regelungsverfahrens vorgesehen ist.

19. Kriechgeschwindigkeitsregelungsanordnung nach einem der Ansprüche 12 bis 18,
**dadurch gekennzeichnet, dass** eine Nebenanordnung vorgesehen ist,
• mit einer Steuereinheit zum Anlegen eines Anfangsdrehmomentes an die Kupplung, vorzugsweise zwischen 5 Nm und 30 Nm, vorgesehen ist,
• mit einem Timer zum Aktivieren der Hauptanordnung nach Ablauf des Timers.

20. Kriechgeschwindigkeitsregelungsanordnung nach einem der Ansprüche 12 bis 19,
**dadurch gekennzeichnet, dass** eine elektronische Überwachungseinrichtung zum Aktivieren der Hauptanordnung oder der Nebenanordnung unter bestimmten Voraussetzungen für den Fahrzustand "Kriechen", vorgesehen ist.

21. Kriechgeschwindigkeitsregelungsanordnung nach einem der Ansprüche 12 bis 20,
**dadurch gekennzeichnet, dass** eine Überwachungseinrichtung zur Deaktivierung der Nebenanordnung und/oder der Hauptanordnung für den Fall vorgesehen ist, dass mindestens eine Voraussetzung für den Fahrzustand "Kriechen" nicht mehr erfüllt ist.
